(19)

Europäisches Patentamt
European Patent Office
Office européen des brevets

(11) **EP 4 016 120 A1**

(12) **EUROPEAN PATENT APPLICATION**

(43) Date of publication:
**22.06.2022 Bulletin 2022/25**

(21) Application number: **21205975.2**

(22) Date of filing: **02.11.2021**

(51) International Patent Classification (IPC):
**G01S 7/481** *(2006.01)* **G01S 17/87** *(2020.01)*

(52) Cooperative Patent Classification (CPC):
**G01S 7/4813; G01S 17/87;** G01S 17/931

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2020 GB 202020272**

(71) Applicant: **Nissan Motor Manufacturing (UK) Ltd Bedford**
**Bedfordshire MK43 0DB (GB)**

(72) Inventors:
• **HOLMES, Christopher**
**Cranfield, MK430DB (GB)**
• **KELLY, Jordan**
**Cranfield, MK430DB (GB)**

(54) **LIDAR SENSOR ASSEMBLY AND MOUNT**

(57) A "low profile" lidar sensor assembly (1) comprises upper (2) and lower (3) lidar sensor units, both comprising rotating emitters and photodetectors. The upper sensor is arranged coaxially and vertically above the lower sensor. A roof mount for mounting the lidar sensor assembly on a vehicle roof (10, Fig. 9) has a base for attachment to the roof; substantially planar and circular lidar sensor support plates (18, 8); at least one vertical stanchion (7) joining the plates; and peripheral sensor retainers (9, 19) with upstanding flanges (12, 20) and an optional downward flange (21) on the upper mount. The stanchion(s) may be at the back of the mount; and may be thief-proofed (Fig. 7). The mount may comprise an adaptor shaped to conform to a vehicle roof; and cable management in the stanchions. The vehicle (11, Fig. 9) may be an autonomous vehicle.

Figure 1

EP 4 016 120 A1

## Description

Technical Field of the Invention

The present invention relates to sensors, specifically to an assembly of LIDAR sensor units and to a mount for LIDAR sensor units for use in autonomous or semi-autonomous vehicles, such as automobiles and other road vehicles. In particular, the invention concerns "low profile" arrangement and mounting of LIDAR sensor units on the roofs of vehicles; especially, but not exclusively, on passenger cars.

Background to the Invention

Fully autonomous vehicles are expected to reach the market in the near future. Vehicles which can operate autonomously in certain environments are already well known.

For example, Nissan (RTM) produces automobiles with ProPILOT (RTM) Park technology which will automatically park the car by controlling the steering, accelerator, brakes, gear shift and parking brake. The technology uses four high-resolution cameras capable of real-time image processing and 12 sonar sensors placed around the vehicle to assess the vehicle's surroundings. After processing the collected information, the system can then safely park the vehicle by controlling the accelerator, brakes, steering and transmission.

Nissan (RTM) also produces automobiles with ProPILOT (RTM) 2.0 technology which allows navigated highway driving with hands-off single-lane driving capabilities. Upon activation using a predefined route, the system will assist the driver with traveling on a multi-lane highway until reaching the highway exit on a predefined route, helping to handle passing, lane diversions and lane exiting. This technology also enables hands-off driving while cruising in a given lane, but hands over to the driver to handle complexities, such as a road divide, or when passing a slower vehicle is possible. To achieve this, 3D high definition map data is combined with 360-degree sensing provided by 7 cameras, 5 radar sensors and 12 sonar sensors, arranged around the body of the car which detect lane markers, signs and surrounding vehicles.

Thus, at present, on one hand the technology allows autonomy at very low speed, during parking manoeuvres, where the slow speed allows the vehicle control system plenty of time to detect objects based on the information from its cameras and sensors (and means that any accident is unlikely to be serious, let alone fatal). On the other hand, the technology allows autonomy at high-speed, but only in a controlled environment; that is to say, on a highway, where vehicles tend to travel at similar speed; where bends are infrequent and shallow; and where pedestrians, cyclists or slow-moving traffic are, in principle, normally banned, so the chances of an accident are low.

In consequence, there are environments where current autonomous vehicles cannot operate. This is disadvantageous. In particular, driving in the urban environment presents challenges to autonomous vehicles. This is as a consequence of relatively high driving speeds (as compared to parking) and a lot of potential obstacles, which need to be identified (from a relatively long distance, on account of speed) and modelled to assess likely movement and to avoid collisions.

The technologies of radar, sonar and cameras in practice prove unable to provide sufficiently high resolution of objects at a fairly long distance as would be required to equal or better a human driver's ability to distinguish a potential obstacle and to determine its likely movement, in order to react in sufficient time.

In consequence, lidar sensors have been proposed for use in autonomous vehicles. Particular attention has been paid to "spinning" lidar sensor units, which, if roof-mounted, can rotate to scan an entire 360-degree field of view around a vehicle. A benefit of rotating lidar sensor units is that they can use higher intensity laser light from their emitters to detect surroundings and thus to scan in greater detail and/or further away, whilst complying with eye-damage regulations, because the laser is only directed towards any one point for a fraction of its 360-degree spin.

Although many vehicle buyers are keen to try autonomous or semi- autonomous vehicles, prior art LIDAR sensor mounts - such as that disclosed in US10,302,744B1 - have practical drawbacks; for example, causing significantly increased wind resistance, due to the frontal cross-sectional area of the mounting. This design of mounting could also be too tall to allow the vehicle to enter multi-storey car parks or domestic garages; and may be difficult to clean, either manually or in car washing machines.

There is a need, therefore, for a "low profile" LIDAR mounting which minimizes the vehicle's frontal cross-sectional area; which allows access to parking and storage areas; and which allows the vehicle to be washed in existing car wash machines. The mounting should be protected against water entry, in case the vehicle is washed with a pressure washer. Due to the high value of LIDAR sensors, some degree of thief-proofing would also be helpful.

Embodiments of the present invention seek to provide an improved arrangement of lidar sensor units and an improved mount for lidar sensor units.

Summary of the Invention

In a broad aspect, the invention concerns a lidar sensor assembly comprising at least two lidar sensor units, an upper lidar sensor unit and a lower lidar sensor unit, wherein the upper lidar sensor unit is arranged above the lower lidar sensor unit; and both are arranged close to the vehicle roof, with a minimized frontal area.

The upper sensor is arranged above, i.e. in the physical space over, the lower lidar sensor. Therefore, in plan view the silhouette of the upper lidar sensor unit overlaps the silhouette of the lower lidar sensor unit. The lidar sensor units each comprise at least one light emitter and at least one photodetector. The or each light emitter is configured to rotate about an axis in the lidar sensor unit. This axis may be a vertical axis relative to a vehicle to which the sensor assembly is fitted. The or each photodetector is configured to rotate about the axis in the lidar sensor unit. The lidar sensor units are mounted coaxially.

According to a first aspect of the invention there is provided a lidar sensor assembly comprising:
an upper lidar sensor unit comprising at least one light emitter and at least one photodetector, each of which is configured to rotate about an axis in the lidar sensor unit; and a lower lidar sensor unit comprising at least one light emitter and at least one photodetector, each of which is configured to rotate about an axis in the lidar sensor unit; the upper lidar sensor unit being arranged coaxially above the lower lidar sensor unit; characterized in that: both upper and lower lidar sensor units are mounted on supports comprising substantially planar and circular sensor support plates and ring fittings comprising at least one upstanding peripheral flange; and in that the upper and lower support plates are joined by an external linkage.

The external linkage may comprise at least one substantially vertical stanchion.

Providing lidar sensors which are arranged one above the other, and in particular coaxially, has several advantages over the horizontally displaced side-by-side arrangement which is often used in prior art.

First, it should be noted that a significant advantage of two lidar sensors is the provision of twice as much information as a single lidar sensor - this can provide a much more accurate picture of the field of view for two reasons. First, there is twice as much information about each point that is within the field of view of both detectors, this can be compared to a doubling of the resolution. Secondly, it can be possible to gain additional information by combining the information about a single point from the two sensor units - effectively in addition to the detection of distance by determining the time taken for light to return from each emitter to each photodetector, the differences in the field of view can be combined in the manner of stereoscopic vision, to get a better understanding of the size/shape of detected objects.

One notable advantage of the arrangement of two lidar sensor units one above another is that one sensor unit's obscuration of the field of view of the other sensor unit is reduced. Notably, lidar sensor units do not normally detect what is above or below them; and even if they did, in the context of autonomous vehicles, there is no valuable information directly above or below the sensor units. Where the sensor units are arranged one above the other, if there is any obscuration it will be minimal; and where they are coaxial, it is unlikely that any of the field of view of one sensor unit will be obscured at all by the other sensor unit.

Additionally, in the context of mounting on a vehicle, and in particular on the roof of a vehicle, mounting lidar sensors one above the other is beneficial in terms of maximising the field of view; whilst minimising aerodynamic and/or aesthetic disturbance.

Vehicles normally drive forward; and even when driving backwards, they normally drive more slowly. Consequently, when mounted on the roof of an automobile, in order to capture as much information in the most relevant, forward, direction sensors are advantageously arranged towards the front of the roof - if they are set back too far, the roof interferes with the field of view in the forward direction. The cost of this arrangement at the front of the roof is that the view to the rear, close to the vehicle is obscured by the roof.

Providing one sensor higher than the other means that the higher sensor has an increased angle between its detector and the rear of the roof and opens up a larger area for viewing (bringing objects closer to the vehicle into the field of view), albeit without "stereoscopic vision" of that region.

In addition to the above, mounting two lidar sensors concentrically is especially beneficial as it can reduce the processing power required to resolve and combine information from the two lidar sensors. This is because the angular position of any given point about the sensor axis is the same.

In another broad aspect, the invention concerns a mount for mounting a plurality of lidar sensor units on the roof of a vehicle; the mount having a base for attachment to the roof of the vehicle and comprising a mounting arrangement for an upper lidar sensor unit and a lower lidar sensor unit; the mounting arrangement being configured to arrange the upper lidar sensor unit above the lower lidar sensor unit.

In the context of the mount, this means that when the base of the mount is attached to the roof of a vehicle and upper and lower lidar sensors are mounted in the mounting arrangement, the upper lidar sensor unit is arranged in the physical space over the lower lidar sensor unit, such that in plan view the silhouette of the upper lidar sensor unit overlaps the silhouette of the lower lidar sensor unit. The mount is for lidar sensor units which each comprise at least one light emitter and at least one photodetector. The mount is preferably for "spinning" lidar sensor units, in which the or each light emitter is configured to rotate about an axis in the lidar sensor unit; and preferably, the or each photodetector is configured to rotate about the axis in the lidar sensor unit. The axis may be a vertical axis relative to a vehicle to which the sensor assembly is fitted. The mount is preferably configured to arrange the lidar sensor units coaxially.

The mounting arrangement may comprise a lower lidar sensor unit support and an upper lidar sensor unit support.

The upper lidar sensor unit support and the lower lidar sensor unit support are connected by at least one external linkage, which may be a stanchion. They may be connected by a plurality of stanchions, for example two stanchions. The provision of one or more stanchions offers stability, compared to an arrangement in which the upper support is mounted to the top of the lower lidar sensor unit and the bottom of the upper lidar sensor unit, with the stability of the upper lidar sensor unit reliant on the stability and robustness of the lower lidar sensor unit.

A plurality of stanchions may be disposed alongside one another. Such an arrangement is counterintuitive - for stability, when providing a plurality of stanchions, arranging them apart, e.g. two in diametric opposition, or three spaced by 120 degrees would appear to be intuitive arrangements. However, providing the stanchions adjacent one another, only obscures the vision of the lower lidar sensor in one region. This spacing apart of the stanchions provides a region in which cables to the upper lidar sensor unit may be arranged. Alternatively, the cables may be arranged in ducts in the stanchions.

The stanchion(s) may be arranged at the rear of the mount. Such an arrangement aligns the region that is obscured by the stanchions with that which is obscured by the roof (particularly for the lower lidar sensor unit), thus losing less valuable sensor data.

The or each stanchion may be adjustable. In particular the or each stanchion may be adjustably connected to one or more of the upper lidar sensor unit support and the lower lidar sensor unit support. The provision of an adjustable connection can allow the relative height of the lidar sensor units to be adjusted for calibration.

The or each stanchion may be releasably attached to one or both of the upper lidar sensor unit support and/or the lower lidar sensor unit support. This is convenient for assembly and adjustment for calibration.

The or each stanchion may be integrally formed with (for example formed as a single piece with, or welded to) one or both of the upper lidar sensor unit support and the lower lidar sensor unit support. This is beneficial in terms of security, as the mount cannot be easily disassembled to steal the (valuable) lidar sensor units.

The lower lidar sensor unit support may be integral with the base of the mounting arrangement. Alternatively, for example, the lower lidar sensor unit support may comprise a support plate for attachment to the lower lidar sensor unit and a separable adaptor may comprise the base.

The base may comprise a roof-fastening element for fastening to the roof. The roof-fastening element may be a fastener-receiving element in the underside of the base for receiving a fastener extending through the roof panel. In particular, the fastener-receiving element may be a threaded hole. It may in particular be a threaded blind hole. A fastener-receiving element which receives a fastener from the underside is beneficial from the perspective of security - access to the interior of the vehicle is required to remove it. A threaded blind hole is especially preferred as it also provides superior weatherproofing. A hole extending through the entirety of the base could provide a conduit for rain to enter the vehicle or at least to enter the fastening mechanism and potentially cause corrosion. Having said that, it may be beneficial to security to provide a threaded hole in the bottom of the lower lidar sensor support plate which can receive the roof-fastening element to connect the plate directly to the roof panel.

The lower lidar sensor unit support may comprise a sensor-fastening element for fastening the lower lidar sensor unit to the lower lidar sensor unit support. The sensor-fastening element may comprise a fastener receiving element in the top of the lower lidar sensor unit support for receiving a fastener associated with the lower lidar sensor unit. The fastener-receiving element may be a through-hole, through which a fastener, such as a bolt, may extend. A bolt may be provided to extend through the through-hole into the base of the lower lidar sensor unit.

A plurality of sensor-fastening elements, for example fastener receiving elements, e.g. through holes, may be provided in the top of the lower sensor unit support, optionally with an associated plurality of fasteners, such as bolts.

The upper lidar sensor unit support may comprise a sensor-fastening element for fastening the upper lidar sensor unit to the upper lidar sensor unit support. The sensor-fastening element may comprise a fastener receiving element in the top of the upper lidar sensor unit support for receiving a fastener associated with the upper lidar sensor unit. The fastener-receiving element may be a through-hole, through which a fastener, such as a bolt, may extend. A bolt may be provided to extend through the through-hole into the base of the upper lidar sensor unit.

A plurality of sensor-fastening elements, for example fastener receiving elements, e.g. through holes, may be provided in the top of the upper sensor unit support, optionally with an associated plurality of fasteners, such as bolts.

The lower lidar sensor unit support may be substantially planar, e.g. a plate. The lower lidar sensor unit support comprises a ring fitting which may have an underside shaped to conform with the roof of a vehicle, such as an automobile, in particular a passenger car. The support may have a top shaped to conform with the underside of a lower lidar sensor unit. The lower lidar sensor unit support plate is circular and planar, in that its top and bottom faces are substantially flat and parallel. The lower lidar sensor unit support comprises a ring fitting comprising one or more retainers in the form of upstanding peripheral flange(s). The retainer(s) are useful in holding the lidar sensor unit in position, especially when the support is a substantially circular plate; and in discouraging entry of dirt and moisture.

The upper lidar sensor unit support is substantially planar, e.g. a plate. The upper lidar sensor unit support may have an underside shaped to conform with the lower lidar sensor unit. It may have a top shaped to conform with the underside of an upper lidar sensor unit. The upper lidar sensor unit support plate is substantially circular and planar. The upper lidar sensor unit support comprises a ring fitting comprising one or more retainers in the form of upstanding peripheral flange(s). The one or more retainers are useful in holding the lidar sensor unit in position, especially when the support plate is a substantially circular plate.

The assembly may be mounted to the mount with the lower lidar sensor unit mounted on the lower lidar sensor unit support and the upper lidar sensor unit mounted on the upper lidar sensor unit support.

A second aspect of the invention provides a vehicle, comprising the lidar sensor assembly according to the broad or first aspect of the invention, optionally comprising any optional features thereof.

The vehicle may be an automobile. The automobile may be a passenger car.

The vehicle may be autonomous. The vehicle may be semi-autonomous.

The mount and/or the sensor assembly may be mounted to the roof of the vehicle.

The mount and/or the sensor assembly may be mounted centrally with respect to the lateral sides of the vehicle.

The mount and/or the sensor assembly may be mounted at or near the front of the roof of the vehicle, for example in the front half of the roof; the front third of the roof; or the front fifth of the roof.

Detailed Description of the Invention

In order that the invention may be more clearly understood, embodiments thereof will now be described - by way of example only - with reference to the accompanying drawings, of which:

Figure 1    is a perspective view of a lidar sensor assembly arranged in a mount;

Figure 2    is a lateral cross section through the lidar sensor assembly and mount of figure 1;

Figure 3    is a plan view of the lidar sensor assembly and mount of figures 1 and 2 indicating (A-A) where the cross section of figure 2 is taken;

Figure 4    is a lateral cross section through the lidar sensor assembly and mount of figures 1-3 taken through a different section;

Figure 5    is a plan view of the lidar sensor assembly and mount of figures 1-4 indicating (A-A) where the cross section of figure 4 is taken;

Figure 6    is an underneath perspective view of a first embodiment of a sub-assembly of the mount of figures 1-5;

Figure 7    is an underneath perspective view of a second embodiment of a sub-assembly for a mount as shown in figures 1-5;

Figure 8    is a front elevation of an automobile comprising the lidar sensor assembly arranged in a mount according to any of figures 1-7;

Figure 9    is a top perspective view of the automobile comprising the lidar sensor assembly arranged in a mount of figure 8;

Figure 10   is a side elevation of the automobile comprising the lidar sensor assembly arranged in a mount of figures 8 and 9;

Figure 11   is a side elevation of the lidar sensor assembly arranged in a mount according to any of figures 1-7 showing certain measurements for calculation of total field of view and overlapping field of view; and

Figure 12   is a side elevation of an automobile comprising the lidar sensor assembly arranged in a mount according to any of figures 1-7 showing the vertical field of view of each lidar sensor unit and the overlapping field of view.

With reference to the accompanying figures, a lidar sensor assembly 1 is comprised of an upper lidar sensor unit 2 and a lower lidar sensor unit 3. The lidar sensor units 2, 3 are arranged in a mount 4, which arranges the upper lidar sensor unit 2 directly above, and coaxially with, the lower lidar sensor unit 3.

The upper lidar sensor unit 2 and lower lidar sensor unit 3 in the embodiments of the invention are identical and are of the well-known "spinning" type, which means that each lidar sensor unit 2, 3 comprises a laser light emitter (not shown) and a corresponding photodetector (not shown) mounted for rotation about a common axis. The lidar sensor units 2, 3 are, as is typical, cylindrical; and the axis of the cylinders corresponds to the axis of rotation of the emitters and photodetectors. The axis is a vertical axis relative to a vehicle on which the sensor units are mounted.

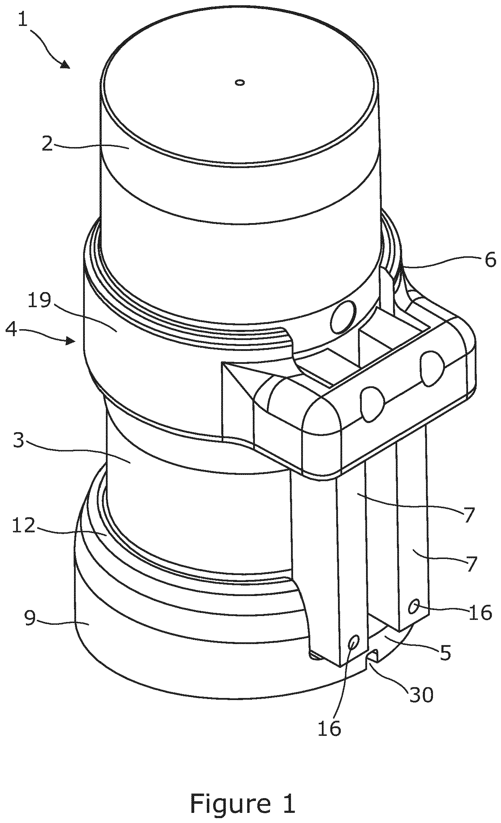

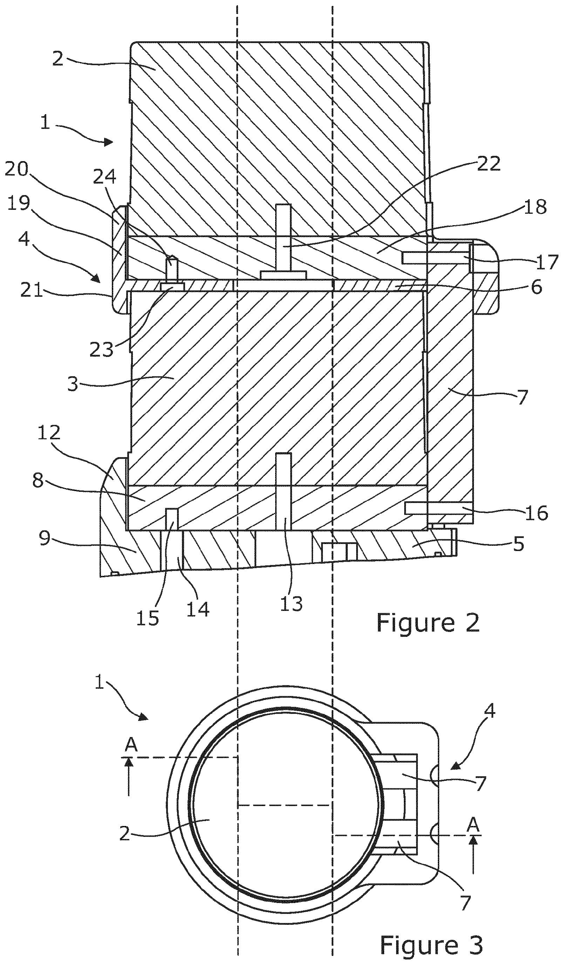

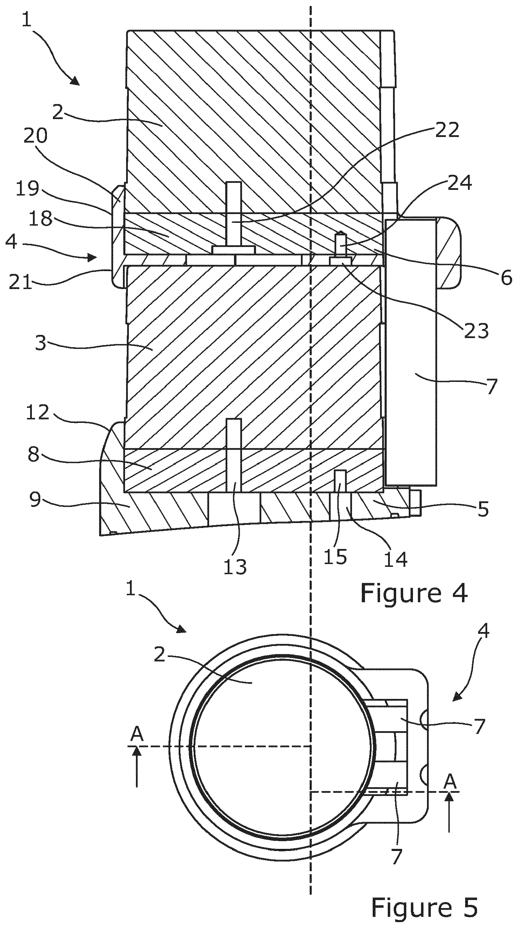

Referring now to the first embodiment shown in figures 1-6, the mount 4 has a mounting arrangement made up of a lower lidar sensor unit support 5, and an upper lidar sensor unit support 6, joined by a pair of external linkages in the form of stanchions 7.

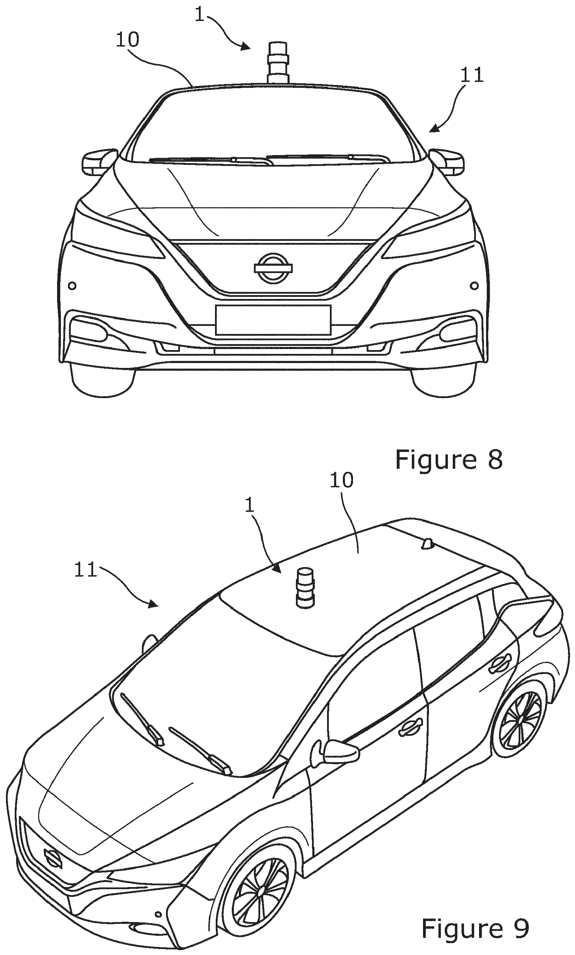

The lower lidar sensor unit support 5 comprises a (lower) support plate 8 and an adaptor or ring fitting 9, which forms the base of the mount 4, its underside being configured for attachment to the roof 10 of a vehicle 11 (as shown in figures 8 to 10). In this embodiment, the configuration involves the underside of the generally circular adaptor 9 being angled with respect to generally circular and planar support plate 8. This accounts for the roof 10 being angled with respect to the ground on which the vehicle 11 is located, and results in the lower lidar sensor unit support 5 being deeper at the front than the rear. In consequence, when mounted on the vehicle 11, with the vehicle 11 on flat horizontal ground, the top surface of the lower lidar sensor unit support 5 is substantially horizontal and the axis of the lidar sensor units 2, 3 - about which the photodetectors and light emitters rotate - is substantially vertical.

The adaptor 9 of the lower lidar sensor unit support 5 is provided with a peripheral flange 12 extending upwardly around the support plate 8 and the lower edge of the lower lidar sensor unit 3 to act as a retainer.

A groove 30 is provided in the underside of adaptor 9, at the rear, between the stanchions 7 to allow cable routing from the lidar sensor units 2, 3, into the vehicle 11.

In this embodiment, a single threaded bolt (not shown) extends through a through-hole 13 in the centre of the support plate 8 into the lower lidar sensor unit 3, to attach it to the mount 4.

For attachment of the base of the mount 4 to the roof 10 of the vehicle 11, threaded screws or bolts (not shown) extend through the roof (from the inside) and then through a plurality of through-holes 14 in the adaptor 9 into blind threaded holes 15 in the underside of the support plate 8. In this particular example, there are four such holes 14, 15 spaced equidistantly.

The pair of stanchions 7 are arranged at the rear of the lower lidar sensor unit support 5 and hence, in use, toward the rear of the vehicle. The peripheral flange 12 has a cut-out or opening at the rear, in which the stanchions 7 are arranged alongside each other (a distance of a few cm, or in terms of a circle having the axis of rotation as its centre, a few degrees apart). Cables (not shown) from the lidar sensors units 2, 3 may be arranged in the space between the stanchions.

Each stanchion 7 is bolted to the support plate 8 of the lower lidar sensor unit support 5 through a lower fixing hole 16.

Each stanchion 7 is also provided with an upper fixing hole 17, through which it is bolted to the upper lidar sensor unit support 6. The distance between the upper fixing holes 17 and the lower fixing holes 16 is tuned to correctly set the distance between the detectors of the upper lidar sensor unit 2 and the lower lidar sensor unit 3; and thereby to maximise the total vertical field of view, or the overlapping vertical field of view as desired. This could be achieved by using adjustable stanchions 7, or stanchions 7 of different heights for different lidar sensor units/vehicles.

In a similar fashion to the lower lidar sensor unit support 5, the upper lidar sensor unit support 6 is made up of two parts; a support plate 18 and a ring fitting 19. The (upper) support plate 18 is generally circular, of the same dimensions as the support plate 8 of the lower lidar sensor unit support, and disposed concentrically therewith (such that in plan view their silhouettes overlap completely). The planes of the support plates 8, 18 are parallel.

The ring fitting 19 of the upper lidar sensor unit support 6 is provided with an upwardly extending peripheral flange 20 and a downwardly extending peripheral flange 21; the upwardly extending peripheral flange 20 extends upwardly around the support plate 18 and the lower edge of the upper lidar sensor unit 2 to act as a retainer for the upper lidar sensor unit 2, whilst the downwardly extending peripheral flange 21 helps constrain the lower lidar sensor unit 3 and maintain its concentricity with the upper lidar sensor unit 2. The flanges 20 and 21 also help to protect the sensors from dirt and moisture ingress. The underside of the ring fitting 19 conforms with the top of the lower lidar sensor unit 3, for a stable connection. The ring fitting 19 of this embodiment also includes a housing extending round the top of the stanchions 7.

In this embodiment, as with the support plate 8 of the lower lidar sensor unit support 5, a single threaded bolt (not shown) extends through a through-hole 22 in the centre of the support plate 18 of the upper lidar sensor unit support 6, into the upper lidar sensor unit 2, to attach it to the mount.

For attachment of the base of the ring fitting 19 to the support plate 18, threaded bolts (not shown) extend from the underside through a plurality of through-holes 23 in the ring fitting 19 into blind threaded holes 24 in the underside of the support plate 18. In this particular example, there are four such holes 24 spaced equidistantly.

The support plates 8, 18 and stanchions 7, which make up a sub-assembly 25 are suitably manufactured in metal, e.g. steel to ensure a solid connection between the lidar sensor units 2, 3, and the roof 10 of the vehicle 11. On the other hand, the ring fitting 19 and adaptor 9 are suitably formed from plastic, e.g. HDPE, which can be easily mass produced and shaped to suit the individual vehicle 11 that the sensor assembly 1 is intended to be attached to. Obviously other materials, such as composites, could be used.

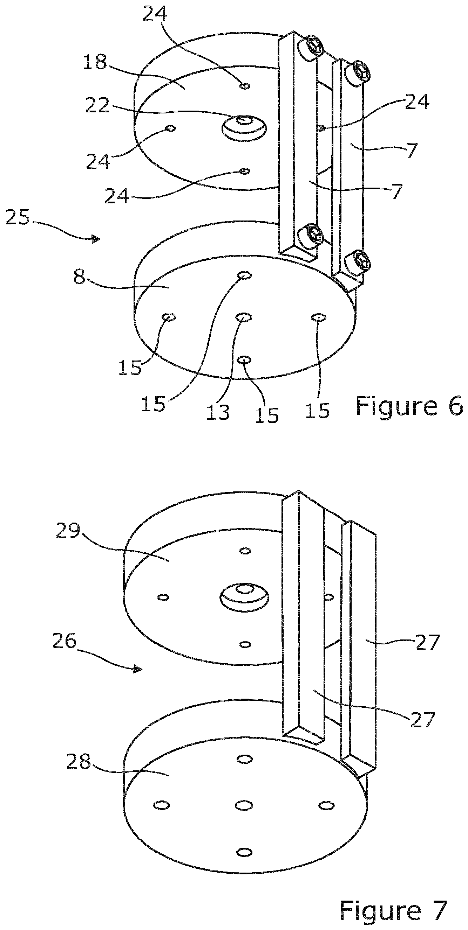

An alternative embodiment of a sub-assembly 26 is shown in figure 7. It may be used with a similar ring fitting 19 and adaptor 9 as in the first embodiment, and functions in exactly the same manner. The difference is that the stanchions 27 of the sub-assembly 26 of the second embodiment are welded to (or otherwise integrally formed with) the lower support plate 28 and the upper support plate 29. The upper lidar sensor 2 will be bolted to the upper support plate 29 by bolts extending from underneath the upper support plate (in the same manner as in the first example). Access to these bolts is not possible with the lower lidar sensor unit 3 in position. In this embodiment, flange 21 may cover only part of the circumference of the sensors, to allow assembly of the lower sensor unit into the mount. For weather protection, this would typically be the front facing part of the sensor circumference.

As in the first embodiment, access to the bolts to remove the lower lidar sensor unit 3 is only possible from within the vehicle, once the assembly 1 is mounted thereon; so use of the sub-assembly of the second embodiment is more secure than that of the first embodiment, in which releasing either the upper or lower set of bolts that attach the stanchions 7 to a respective support plate 8, 18, would allow the upper lidar sensor unit 2 to be removed.

To form the assembly 1 and to mount it on a vehicle 11, the underside of the upper lidar sensor unit 2 is first fastened to the upper support plate 18 (or 29). The ring fitting 19 is then fastened to the upper support plate 18 (or 29) and the lower lidar sensor unit 3 is introduced between lower support plate 8 (or 28) and the ring fitting 19, such that it is coaxial with the upper lidar sensor unit 2. The lower lidar sensor unit 3 is fastened in place. The adaptor 9 is then fitted to the underside of the lower support plate 8. The cables (not shown) from the lidar sensor units 2, 3 are routed though the space between the stanchions 7, and along the groove 30 in the underside of the adaptor 9, into an aperture (not shown) through the roof 10 of the vehicle 11 for connection to a vehicle control system (not shown). A seal (e.g. a rubber O-ring, or sealant) is applied between the underside of the adaptor 9 and the roof 10 of the vehicle 11; and the adaptor 9 is fastened in place.

As shown in figures 8-10 (and 12), the lidar sensor assembly 1 (or rather the kit comprising the assembly of lidar sensor units 2, 3 mounted to the mount 4) is typically installed near the front of the roof 10 of the vehicle 11 (in this case a passenger car), about 20-30 cm back from the top of the windscreen, centrally between the two lateral sides thereof.

In use, the lidar sensor units 2, 3 take measurements in the conventional way; and these are processed e.g. by an onboard computer, in order to allow the vehicle 11 to drive autonomously (it may be fully or semi-autonomous).

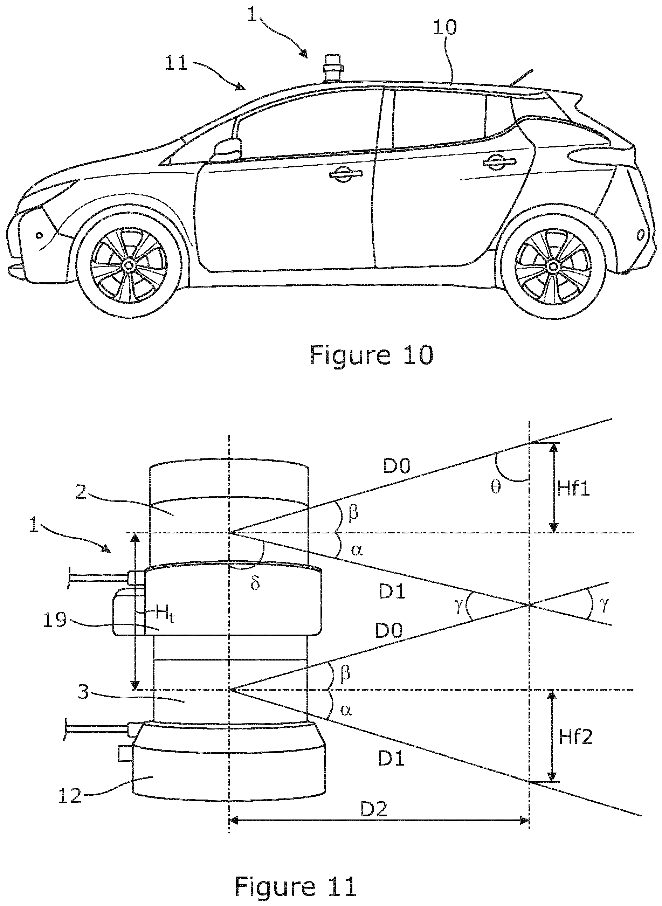

With reference to Figure 11, it is possible to determine mathematically the extent of the region in which it is possible to obtain greater density of data, by virtue of the overlapping fields of view of the dual co-axially mounted lidar sensor units 2, 3. It is also possible to determine mathematically the extent of the additional regions about which data can be obtained as a consequence of the additional second sensor extending the vertical field of view.

Maximisation of increased data resolution in the region/area of interest allows for an increasingly accurate representation of the world being captured; aiding in effective classification methods.

Mounting multiple sensors in a concentrically vertical fashion gives the following benefits:-

- Increased density in an overlapping area of interest [$\gamma$] by multiple of two for the two sensors present.
- Increased total vertical field of view (V-FOV) compared with a single sensor. These can be calculated as follows:

$$\delta = 90 \deg - \alpha; \ \theta = 90 \deg - \beta$$

$$D2 = \left(\frac{H_t}{2}\right)\frac{\sin\delta}{\sin\alpha}$$

$$D1 = \sqrt{\frac{H_t{}^2}{4} + D2^2}$$

$$Hf2 = \sqrt{D1^2 - D2^2}$$

$$Hf1 = D2\ \frac{\sin\beta}{\sin\theta}$$

$$V - FOV@D2 = H_t + Hf_2 + Hf_1$$

In these calculations, $\alpha$ and $\beta$ represent angular partial fields of view of the upper and lower lidar sensors; $\alpha$ being a downwardly angled field of view, and $\beta$ being an upwardly angled field of view, for each sensor.

$\delta$ and $\theta$ are complimentary angles to the above, which are convenient for calculations.

$\gamma$ represents the field of view where both sensors can detect objects, giving an effect analogous to stereoscopic vision. Where the upper and lower sensors are identical, $\gamma = \alpha + \beta$.

Hf1 is the depth of the field of view of the upper sensor above the level of the upper sensor at a longitudinal distance point where the fields of view of upper and lower sensors overlap.

Hf2 is the depth of the field of view of the lower sensor below the level of the lower sensor at a longitudinal distance point where the fields of view of upper and lower sensors overlap.

Ht is the tuning height; or the vertical separation between upper and lower sensors.

D0 and D1 are the hypotenuse lines of the upper limit of the field of view of the lower sensor; and of the lower limit of the field of view of the upper sensor, respectively.

Finally, D2 is the longitudinal distance from the sensor rotational axis to the point where lines D0 and D1 overlap.

In an example, $\alpha$ and $\beta$ are both 15°; so $\delta$ and $\theta$ are both 75°; and $\gamma$ is 30°.

If Ht is 65mm, Hf1 and Hf2 are both 32.5mm; and D0 and D1 are both 125.6mm; while D2 is 121.3mm.

Optimisation of the area of interest [$\gamma$] and total V-FOV at intersection distance **[D2]** can be established with tuning height [$H_t$] and formulated as above.

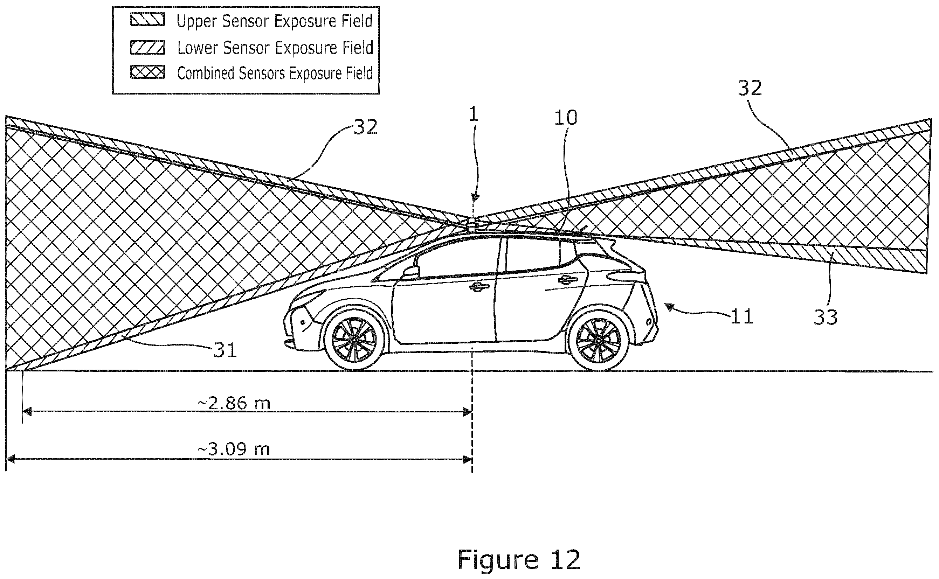

The results of this optimisation can be seen visually with reference to figure 12. As figure 12 shows, in very close proximity to the lidar sensor units 2, 3 there is relatively little overlap of vertical field of view. However, by the front of the vehicle 11, the overlapping region in which double-data is achieved is substantial.

As noted, doubling of the data can be compared to a doubling of the resolution. On top of that it can be possible to gain additional information about objects in this double-data region by combining the information about a single point from the two sensors - effectively in addition to the detection of distance by determining the time taken for light to return from each emitter to each photodetector, the differences in the field of view can be combined in the manner of stereoscopic vision, to get a better understanding of the size/shape of detected objects.

Figure 12 also shows how the two concentrically mounted, vertically displaced lidar sensor units 2, 3 expands the vertical field of view. In the exemplary embodiment, the lower lidar sensor unit 3 can see the ground from 2.86m in front of the vehicle, whilst the upper lidar sensor unit 2 sees the ground from 3.09m ahead; so there is a region 31 where only the lower lidar unit 3 can see.

There are similarly regions 32, 33 where only the upper lidar sensor unit 2 can see. Notably, there are two such regions 32, 33 for the upper lidar sensor unit 2. The first region 32 is obvious. Since the two lidar sensor units 2, 3 are identical, with identical theoretical vertical fields of view, the upper lidar sensor 2 unit can see region 32 above the region where only the lower lidar sensor unit 3 could see. Effectively, at any distance, 360 degrees around the vehicle, the upper lidar sensor unit 2 sees higher, corresponding to the fact that it is mounted higher.

The second region in which only the upper lidar sensor unit 2 can see, is less obvious, however, as set out above, providing one sensor higher than the other means that the higher lidar sensor unit 2 has an increased angle between its detector and the rear of the roof 10. This opens up a larger area 33 for viewing behind the car (and similarly, to an extent, to the sides of the car), bringing objects closer to the rear of the vehicle into the field of view, albeit without the "stereoscopic vision" of the double-hatched region between areas 32 and 33.

The above embodiments are described by way of example only. Many variations are possible without departing from the scope of the invention as defined in the appended claims.

**Claims**

1.  A lidar sensor assembly (1) comprising:

    an upper lidar sensor unit (2) comprising at least one light emitter and at least one photodetector, each of which is configured to rotate about an axis in the lidar sensor unit; and
    a lower lidar sensor unit (3) comprising at least one light emitter and at least one photodetector, each of which is configured to rotate about an axis in the lidar sensor unit;

the upper lidar sensor unit (2) being arranged coaxially above the lower lidar sensor unit (3);
**characterized in that**:
both upper and lower lidar sensor units (2, 3) are mounted on supports (5, 6) comprising substantially planar and circular sensor support plates (8, 18; 28, 29) and ring fittings (9, 19) comprising at least one upstanding peripheral flange (12, 20); and **in that**:
the upper and lower support plates (8, 18; 28, 29) are joined by an external linkage (7, 27).

2.  A lidar sensor assembly (1) according to claim 1 comprising a mount (4) for mounting the upper (2) and lower (3) lidar sensor units on the roof (10) of a vehicle (11) in use,
    the mount (4) having a base (9) for attachment to the roof (10) of the vehicle (11), and comprising a mounting arrangement for the upper and lower lidar sensor units (2, 3).

3.  A lidar sensor assembly (1) according to claim 2 wherein in use, at least one mounting screw or bolt extends through the roof (10) of the vehicle (11) from a vehicle interior side, and then passes through at least one through hole (14) in the base (9) into at least one threaded hole (15) in the underside of the lower support plate (8).

4.  A lidar sensor assembly (1) according to any preceding claim, wherein the external linkage comprises at least one substantially vertical stanchion (7, 27).

5.  A lidar sensor assembly (1) according to claim 4 wherein the upper lidar sensor unit support (18, 29) and the lower lidar sensor unit support (8, 28) are connected by a plurality of stanchions (7, 27), which are disposed alongside one another; and are arranged at the rear of the mount (4).

6.  A lidar sensor assembly (1) according to claim 4 or claim 5, wherein the or each stanchion (7) is releasably attached to one or both of the upper lidar sensor unit support (18) and/or the lower lidar sensor unit support (8).

7.  A lidar sensor assembly (1) according to claim 4 or claim 5, wherein the or each stanchion (27) is integrally formed with one or both of the upper lidar sensor unit support (29) and the lower lidar sensor unit support (28).

8.  A lidar sensor assembly (1) according to any preceding claim, wherein the lower lidar sensor unit support (8, 28) comprises a sensor-fastening element (13) for fastening the lower lidar sensor unit (3) to the lower lidar sensor unit support, the sensor-fastening element being a fastener receiving element (13) in the top of the lower lidar sensor unit support (8, 28) for receiving a fastener associated with the lower lidar sensor unit (3).

9. A lidar sensor assembly (1) according to claim 8, wherein the fastener-receiving element is a through-hole (13), through which a fastener is able to extend.

10. A lidar sensor assembly (1) according to any preceding claim, wherein the upper lidar sensor unit support (18, 29) comprises a sensor-fastening element for fastening the upper lidar sensor unit (2) to the upper lidar sensor unit support, the sensor-fastening element being a fastener receiving element (22) in the top of the upper lidar sensor unit support for receiving a fastener associated with the upper lidar sensor unit (2).

11. A lidar sensor assembly (1) according to claim 10, wherein the fastener-receiving element (22) comprises a through-hole, through which a fastener is able to extend.

12. A lidar sensor assembly (1) according to any preceding claim, wherein the lower lidar sensor unit support (5) has an underside shaped to conform with the roof (10) of a vehicle (11); has a top shaped to conform with the underside of a lower lidar sensor unit (3); and comprises one or more peripheral retainers (12).

13. A lidar sensor assembly (1) according to any preceding claim, wherein the upper lidar sensor unit support ring fitting (19) comprises at least one downwardly extending flange (21).

14. A vehicle (11) comprising the lidar sensor assembly (1) according to any of claims 1 to 13.

15. A vehicle (11) according to claim 14 which is an autonomous or semi-autonomous automobile.

1

2

19

4

3

12

9

6

7

7

16

5

30

16

Figure 1

Figure 2

Figure 3

Figure 4

Figure 5

Figure 6

Figure 7

Figure 8

Figure 9

Figure 10

Figure 11

Figure 12

EP 4 016 120 A1

Europäisches
Patentamt

European
Patent Office

Office européen
des brevets

## EUROPEAN SEARCH REPORT

Application Number

EP 21 20 5975

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 10 302 744 B1 (KRISHNAN VENKATESH [US] ET AL) 28 May 2019 (2019-05-28) * column 7, lines 19-29; figures 1-4 * | 1-15 | INV. G01S7/481 G01S17/87 |
| Y | WO 2018/017395 A1 (UBER TECHNOLOGIES INC [US]) 25 January 2018 (2018-01-25) | 1,2,4,6, 8-11, 13-15 | |
| A | * paragraphs [0046] – [0054]; figures 3B,3D-3F * * paragraphs [0018] – [0022]; figure 1 * | 3,5,7,12 | |
| Y | US 2019/098233 A1 (GASSEND BLAISE [US] ET AL) 28 March 2019 (2019-03-28) | 1,2,4,6, 8-11, 13-15 | |
| A | * paragraphs [0084], [0091]; figure 2a * | 3,5,7,12 | |
| A | US 2017/210297 A1 (KIM RICHARD S [US] ET AL) 27 July 2017 (2017-07-27) * paragraphs [0054] – [0055]; figures 8,9a-9d * | 1-15 | |
| A | CN 206 217 814 U (ORDOS CITY PUDU TECH CO LTD) 6 June 2017 (2017-06-06) * paragraph [0025]; figure 1 * | 1-15 | TECHNICAL FIELDS SEARCHED (IPC) G01S |

The present search report has been drawn up for all claims

| Place of search | Date of completion of the search | Examiner |
|---|---|---|
| Munich | 4 April 2022 | Cortona, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                           

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 5975

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2022

| Patent document cited in search report | | Publication date | Patent family member(s) | | Publication date |
|---|---|---|---|---|---|
| US 10302744 | B1 | 28-05-2019 | CN | 110182140 A | 30-08-2019 |
| | | | DE | 102019104465 A1 | 29-08-2019 |
| | | | US | 10302744 B1 | 28-05-2019 |
| WO 2018017395 | A1 | 25-01-2018 | CN | 109641572 A | 16-04-2019 |
| | | | CN | 111572499 A | 25-08-2020 |
| | | | EP | 3481683 A1 | 15-05-2019 |
| | | | EP | 3786007 A1 | 03-03-2021 |
| | | | JP | 6564546 B1 | 21-08-2019 |
| | | | JP | 6757833 B2 | 23-09-2020 |
| | | | JP | 2019196177 A | 14-11-2019 |
| | | | JP | 2019525865 A | 12-09-2019 |
| | | | WO | 2018017395 A1 | 25-01-2018 |
| US 2019098233 | A1 | 28-03-2019 | AU | 2018341833 A1 | 23-04-2020 |
| | | | AU | 2021200905 A1 | 04-03-2021 |
| | | | CA | 3077071 A1 | 04-04-2019 |
| | | | CN | 111149015 A | 12-05-2020 |
| | | | EP | 3688489 A1 | 05-08-2020 |
| | | | IL | 273524 A | 31-08-2021 |
| | | | JP | 6854387 B2 | 07-04-2021 |
| | | | JP | 2020535407 A | 03-12-2020 |
| | | | JP | 2021105611 A | 26-07-2021 |
| | | | KR | 20200046131 A | 06-05-2020 |
| | | | KR | 20210089792 A | 16-07-2021 |
| | | | SG | 11202002584Y A | 29-04-2020 |
| | | | US | 2019098233 A1 | 28-03-2019 |
| | | | US | 2020404197 A1 | 24-12-2020 |
| | | | US | 2021203864 A1 | 01-07-2021 |
| | | | WO | 2019067068 A1 | 04-04-2019 |
| US 2017210297 | A1 | 27-07-2017 | NONE | | |
| CN 206217814 | U | 06-06-2017 | NONE | | |

EPO FORM P0459

For more details about this annex : see Official Journal of the European Patent Office, No. 12/82

**EP 4 016 120 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10302744 B1